# EUROPÄISCHE PATENTSCHRIFT

(11) **EP 1 449 091 B1**
(45) Veröffentlichungstag und Bekanntmachung des Hinweises auf die Patenterteilung: **17.05.2006**
(21) Anmeldenummer: 02791592.5
(22) Anmeldetag: 31.10.2002
(51) Int. Cl.: G06F 12/14, G06F 1/00, G06F 12/08, G06F 12/12

(54) **VERFAHREN ZUM SYNCHRONISIEREN EINES SPEICHERS MIT DEM HAUPTSPEICHER EINER RECHENANLAGE**
METHOD FOR SYNCHRONISING A MEMORY WITH THE MAIN MEMORY OF A COMPUTER
PROCEDE DE SYNCHRONISATION D'UNE MEMOIRE AVEC LA MEMOIRE PRINCIPALE D'UN ORDINATEUR

(30) Priorität: 28.11.2001 DE 10158393
(43) Veröffentlichungstag der Anmeldung: 25.08.2004
(73) Patentinhaber: Infineon Technologies AG, 81669 München (DE)
(72) Erfinder: GAMMEL, Berndt, M., 85570 Markt Schwaben (DE); KÜNEMUND, Thomas, 80337 München (DE); SEDLAK, Holger, 85658 Egmating (DE)
(74) Vertreter: Epping - Hermann - Fischer
(86) Internationale Anmeldenummer: PCT/DE2002/004066
(87) Internationale Veröffentlichungsnummer: WO 2003/048943

(56) Entgegenhaltungen:
- EP-A- 0 347 040
- EP-A- 0 583 140
- EP-A- 0 720 098
- WO-A-99/28887
- WO-A-02/056184
- DE-A- 19 957 810
- US-A- 4 319 079
- US-A- 4 573 119
- US-A- 5 081 675
- US-A- 6 092 172

## Beschreibung

Die Erfindung betrifft ein Verfahren zum Synchronisieren eines Cache-Speichers mit einem Hauptspeicher, wobei der Cache-Speicher zur Zwischenspeicherung von Daten zwischen einem Prozessor und einem Hauptspeicher vorgesehen ist, und wobei Speichereinträge des Cache-Speichers zumindest einen Datenbereich und einen Kennungsbereich aufweisen. Außerdem betrifft die Erfindung einen Cache-Speicher zur Durchführung des Verfahrens.

Cache-Speicher sind in fast allen modernen Rechenanlagen als sehr schnelle Pufferspeicher zwischen dem Prozessor und dem Hauptspeicher vorgesehen und werden als Prozessor-Cache-Speicher oder oft auch kurz als CPU-Cache bezeichnet. Ein CPU-Cache ist deutlich schneller, aus Kostengründen aber auch deutlich kleiner als der Hauptspeicher. Im Vergleich zu einer Zentraleinheit ohne CPU-Cache ist die Ausführungsgeschwindigkeit einer Zentraleinheit mit CPU-Cache - natürlich bei gleich großen Hauptspeichern - deutlich größer.

Es wird zwischen First-Level-Cache-Speichern und Second-Level-Cache-Speichern unterschieden. Der First-Level-Cache-Speicher befindet sich direkt im Prozessor, so daß dieser mit Prozessortakt ohne Wartezyklen auf ihn zugreifen kann. Der Second-Level-Cache-Speicher befindet sich hingegen zum Beispiel auf einer Hauptplatine und arbeitet daher im Platinentakt, der niedriger als der Prozessortakt ist.

Mikroprozessoren benötigen zum Abarbeiten von durch sie auszuführenden Programmen darüber hinaus einen Stapelspeicher, auch "Stack" genannt. Immer wenn der Prozessor bei der Abarbeitung eines Programmes nicht nur sequentiell aufeinanderfolgende Programmanweisungen abzuarbeiten hat, sondern, wie z. B. bei einem Unterprogramm-Aufruf, einen Programmsprung auszuführen hat, dient der Stapelspeicher zur Aufnahme einer Rücksprungadresse. Zu dieser springt er nach Beendigung des Unterprogramms zurück, um an der selben Stelle, von wo er den Unterprogrammsprung aus unternommen hat, die Abarbeitung des Programmes fortzusetzen. Ein Stapelspeicher ist dabei üblicherweise als flüchtiger Speicher ausgeführt.

Sowohl der CPU-Cache als auch der Stapelspeicher müssen mit dem Hauptspeicher einer Rechenanlage synchronisiert werden. Es existiert eine Vielzahl von Standardverfahren auf welche Weise solche CPU-Caches realisiert und die Synchronisation mit dem Hauptspeicher durchgeführt werden kann. Diese Standardverfahren sind unter den Namen "Write-through" oder "Write-back"-Strategie bekannt und können beispielsweise dem Lehrbuch "Computer Architecture, A quantitative approach" von J. L. Hennessey, D. A. Paterson, Second Edition, Morgan Kaufmann Publications, San Francisco, 1996 entnommen werden.

So müssen beispielsweise bei der Abarbeitung von Programmen Speicherbereiche, genauer Speichereinträge in einem Cache-Speicher oder in einem Stapelspeicher freigegeben oder gelöscht werden, um andere Daten aus dem Hauptspeicher dort einlagern zu können. An Hand des nachfolgenden kurzen Beispiels kann dies verdeutlicht werden. In einer sogenannten "Multitasking"-Umgebung findet ein Taskwechsel, also ein Aufruf eines anderen Programmes statt. Eine neu auszuführende Task B befindet sich üblicherweise im gleichen logischen Speicherbereich wie eine unterbrochene oder beendete Task A. Damit die Task B nicht fälschlicherweise oder unberechtigterweise auf die noch in dem CPU-Cache eingelagerten Daten der Task A zugreifen kann, müssen die Speicherbereiche oder Speichereinträge der Task A in dem CPU-Cache und in dem Stapelspeicher ungültig gemacht (invalidiert) oder gelöscht werden. Hierzu ist es bekannt, bei einem Speichereintrag, der einen Adreßbereich, einen dem Adreßbereich zugeordneten Datenbereich und einen dem Adreßbereich zugeordneten Kennungsbereich umfaßt, ein Speicherfeld vorzusehen, das einen Marker (auch "flag" genannt) enthält. Ein Invalidieren oder Ungültigmachen dieses Speichereintrags erfolgt dann dadurch, daß der Marker des Speicherfeldes in einen ersten Zustand gebracht wird, der signalisiert, daß die in dem Datenbereich gespeicherten Daten keine Gültigkeit besitzen.

Weiterhin ist es bekannt, in dem Kennungsbereich eines Speichereintrags ein weiteres Speicherfeld vorzusehen, das mittels eines Markers anzeigt, ob der Datenbereich modifiziert wurde und der Inhalt des Datenbereiches noch nicht in den Hauptspeicher zurückgeschrieben wurde. Dieses Zurückschreiben vor dem Invalidieren des Speichereintrags wird als Synchronisation bezeichnet.

Die Aufgaben des Invalidierens und des Zurückschreibens werden typischerweise von dem Betriebssystem des Prozessors durchgeführt. Dem Prozessor stehen hierfür spezielle Steuerregister oder Instruktionen zur Verfügung, mit denen dieser einzelne Zeilen in einem CPU-Cache invalidieren oder zurückschreiben kann. Bekannt ist ebenfalls mittels Steuerregister, Steuerwerken oder Instruktionen alle Speichereinträge eines CPU-Caches zu invalidieren bzw. zurückzuschreiben. Das oben beschriebene erstere Vorgehen hat den Nachteil, daß das Betriebssystem einen hohen Verwaltungsaufwand und Zeit benötigt, um größere Speicherbereiche des CPU-Caches - jedoch nicht alle Speichereinträge des CPU-Caches - zu invalidieren oder zurück zuschreiben. Das vollständige Invalidieren oder Zurückschreiben eines CPU-Caches weist den Nachteil auf, daß möglicherweise auch unnötigerweise Daten anderer Tasks ebenfalls synchronisiert werden, wodurch die Performance leidet.

Zur Aufrechterhaltung der Cache-Coherence eines CPU-Caches mit einem Hauptspeicher schlägt die EP O 439 325 B1 vor, einen Adreßmonitor vorzusehen.

Aus der DE 199 57 810 A ist ein Streuabbildungsverfahren für eine Cache-Speicher-Einrichtung bekannt. Dabei wählt die Cache-Speicher-Einrichtung eine Anzahl von bestimmten Bits einer Speicheradresse aus und verwendet die ausgewählten Bits als Tags zur Kennzeichnung, ob ein Speicherplatz cachebar ist. Durch das Verfahren ist es möglich, mithilfe von Tags als cachebar gekennzeichnete Speicherplätze verstreut innerhalb eines Systemspeichers anzuordnen.

Aus der US-A-5 081 675 ist bekannt, wie Software in einem Speicher gegen unautorisierte Benutzung geschützt werden kann. Dabei ist der Adressraum eines Datenspeichers willkürlich in eine Vielzahl von Datensegmenten unterteilt und die Datensegmente werden gemäß einem bestimmten Algorithmus verstreut angeordnet. Nur mit einem Schlüssel können die verstreuten Datensegmente wieder zusammengeführt werden.

Es ist Aufgabe der Erfindung, eine Möglichkeit anzugeben, mit der auf einfache Weise eine Synchronisation zwischen einem Cache-Speicher und einem Hauptspeicher herstellbar ist.

Die Aufgabe wird durch Verfahren mit den Merkmalen des Anspruchs 1 gelöst.

Als Suchkriterium für eine Synchronisation dient folglich der Inhalt eines ersten Speicherfeldes. Dabei erfolgt eine Synchronisation mit dem Hauptspeicher nur bei denjenigen Speichereinträgen, bei denen der Marker des dritten Speicherfeldes eine Änderung des Datenbereichs seit dem letzten Synchronisieren anzeigt.

Vorzugsweise wird bei einem Zustand des Markers des dritten Speicherfeldes, der anzeigt, daß keine Änderung des Datenbereiches des Speichereintrags seit dem letzten Synchronisieren erfolgt ist, der Marker des zweiten Speicherfeldes auf einen ersten Zustand gesetzt, der anzeigt, daß der Speichereintrag einen ungültigen Wert aufweist. Durch diesen Verfahrensschritt lassen sich auf einfache Weise all diejenigen Speichereinträge, die prinzipiell zurückzuschreiben wären, jedoch keinerlei Änderung seit dem letzten Synchronisieren erfahren haben, invalidieren. Alternativ wäre natürlich auch denkbar, statt dem Marker des zweiten Speicherfeldes in einen entsprechenden Zustand zu verbringen, der die Invalidierung anzeigt, den Inhalt der betreffenden Datenbereiche zu löschen. Dies kann insbesondere bei hochsicherheitsrelevanten Anwendungen vorteilhaft sein.

In einem weiteren vorteilhaften Verfahrensschritt wird der Marker des dritten Speicherfeldes in einen zweiten Zustand gebracht, der anzeigt, daß keine Änderung des Datenspeichers des Speichereintrags seit dem letzten Synchronisieren erfolgt ist. Mit anderen Worten bedeutet dies, daß nach einem erfolgten Synchronisationsvorgang zwischen einem Speichereintrag und dem Hauptspeicher der Marker des dritten Speicherfeldes "gelöscht" wird, so daß bei einem weiteren Suchvorgang kein erneutes Synchronisieren mit dem Hauptspeicher erfolgt.

Das Synchronisieren eines Speichereintrags mit dem Hauptspeicher ist ein iterativer Vorgang, so daß die Schritte a) bis d) bzw. a) bis e) so lange wiederholt werden, bis keine Übereinstimmung zwischen den bereitgestellten Synchronisations-Wert und dem Inhalt des ersten Speicherfeldes eines Speichereintrags mehr vorliegt.

Das Übertragen des Inhalts des Datenbereiches eines Speichereintrags in den Hauptspeicher umfaßt folgende Schritte:
aa) Ermittlung der Adresse des Speichereintrags des Cache-Speichers,
bb) Übergeben der Adresse aus dem Adreßbereich des Speichereintrags an den Prozessor,
cc) Adressieren des Speichereintrags durch den Prozessor,
dd) Auslesen des Inhalts des Datenbereiches des Speichereintrags, und
ee) Speichern des Inhaltes des Datenbereiches des Speichereintrags im Hauptspeicher.

Eine mögliche Vorgehensweise zur Synchronisierung eines Speichereintrags mit dem Hauptspeicher besteht somit darin, bei übereinstimmenden Wert des ersten Speicherfeldes und des Synchronisations-Wertes die zu dem Speichereintrag gehörige Adresse aus dem Adreßbereich an den Prozessor zu übergeben und anschließend einen an sich bekannten Suchvorgang innerhalb des Cache-Speichers, wie er auch aus dem Stand der Technik geläufig ist, anzuwenden.

Vorzugsweise kann zwischen den Schritten bb) und cc) ein weiterer Marker in einem Register gesetzt werden, wobei das Register außerhalb des Cache-Speichers in der Zentraleinheit angeordnet ist und durch den Prozessor auslesbar ist. Der Marker dient als Indikator, daß ein Zurückschreibe-Vorgang vorgenommen wurde. Bei gesetztem Marker in besagtem Register wird ein erneuter Suchdurchlauf nach einem gesetzten Marker in dem dritten Speicherfeld durchgeführt. Sobald der Suchvorgang angestoßen wurde, erfolgt nach Schritt ee) ein Rücksetzen des Markers in dem Register. Sind alle Speichereinträge des Cache-Speichers innerhalb eines Suchvorganges überprüft worden und ist kein Marker in dem Register gesetzt, so bedeutet dies, daß alle fraglichen Speichereinträge mit dem Hauptspeicher synchronisiert wurden.

Der erfindungsgemäße Speicher ist insbesondere für den Einsatz in Anwendungen mit hohen Sicherheitsanforderungen gedacht. Insbesondere kann die gesamte Rechenanlage in einem einzigen Chip untergebracht sein und beispielsweise Einsatz in einer Chipkarte finden. Eine derartige Chipkarte kann als Geldkarte, Ausweiskarte, Telephonkarte, SIM-Karte oder dergleichen verwendet werden. Besonders vorteilhaft ist der Einsatz dann, wenn verschiedene Organisationen z. B. unterschiedliche Dienstleistungsanbieter, verschiedene Programme in der Rechenanlage ablegen, welche untereinander in keiner Beziehung zu einander stehen. Jeder Programmeinheit - wobei unterstellt wird, daß jede Organisation eine Programmeinheit in die Rechenanlage einspeichert - kann dann ein kryptographischer Schlüssel zugewiesen werden.

Das erfindungsgemäße Verfahren zum Synchronisieren eines Cache-Speichers mit einem Hauptspeicher läßt sich schnell und energieeffizient durchführen, so daß es insbesondere für Anwendungen ohne eigene Energieversorgungen interessant ist. Dies trifft beispielsweise auf kontaktlos betriebene Chipkarten zu.

In einer vorteilhaften Ausführung der Erfindung weist jeder Speichereintrag des Speichers drei Speicherbereiche auf: Der Datenbereich enthält die eigentlichen Daten, also Programmbefehle oder zu verarbeitende Daten, die von einer Logik des Prozessors aus dem Hauptspeicher bereits kopiert worden sind oder noch in diesen kopiert werden müssen; der Adreßbereich enthält die zugehörige Adresse; der Kennungsbereich enthält von der Cache-Logik erzeugte Informationen, die für die Verwaltung des Nachladens neuer Daten aus dem Hauptspeicher und das Ersetzen zu überschreibender Speichereinträge bei vollem Speicher benötigt werden und z. B. Informationen darüber umfaßt, ob der entsprechende Speichereintrag gültig ist, wann er zuletzt und wie häufig benutzt worden ist. Insbesondere ist in dem Kennungsbereich ein erstes Speicherfeld vorgesehen, das einen Wert beinhaltet, der angibt, ob oder mit welchem kryptographischen Schlüssel Daten in dem Datenbereich des Speichers gespeichert sind.

Das erste Speicherfeld des Kennungsbereiches erfüllt zwei Zwecke.

Zunächst kann diesem entnommen werden, ob oder mit welchem kryptographischem Schlüssel Daten in den Datenbereich des Speichers gespeichert sind. Hieraus ergibt sich, daß eine direkte Zuordnung zwischen dem ersten Speicherfeld und dem Datenbereich vorhanden ist. Speziell bei sicherheitsrelevanten Anwendungen wie dies beispielsweise bei Geldkarten der Fall ist, kann es sinnvoll sein, die in dem Datenbereich einzuschreibenden Daten verschlüsselt abzulegen. Sobald die verschlüsselten Daten aus diesem Datenbereich ausgelesen werden sollen, wird eine Information benötigt, mit welchem Schlüssel die Daten entschlüsselt werden können. Diese Information kann dem ersten Speicherfeld des Kennungsbereiches entnommen werden. Dabei kann der Wert des ersten Speicherfeldes den kryptographischen Schlüssel selbst enthalten oder aber einen Verweis auf einen kryptographischen Schlüssel enthalten. Bei der nachfolgenden Beschreibung wird davon ausgegangen, daß verschiedene Programmeinheiten, die eingangs genannten Tasks, jeweils mit einem unterschiedlichen Schlüssel ver- bzw. entschlüsselt werden. Dies kann zur Folge haben, daß in jedem ersten Speicherfeld unterschiedliche Schlüssel oder unterschiedliche Werte, die auf einen kryptographischen Schlüssel verweisen, enthalten sind.

Die in dem ersten Speicherfeld vorhandenen Werte können nun in vorteilhafter Weise für die Synchronisation des Cache-Speichers mit einem Hauptspeicher einer Rechenanlage verwendet werden. Bei einem Wechsel zwischen zwei Programmeinheiten wird es regelmäßig so sein, daß die der beendeten Programmeinheit zugeordneten Daten in dem Cache-Speicher invalidiert oder zurückgeschrieben werden sollen. Dadurch, daß alle Speichereinträge, die Daten der selben Programmeinheit beinhalten, in dem ersten Speicherfeld des Kennungsbereiches einen identischen Wert aufweisen, können diese auf einfache Weise identifiziert und weiter verarbeitet werden. Der Prozessor, der dem Programmablauf und somit den Wechsel zwischen zwei Programmeinheiten steuert, braucht lediglich nach dem der zu beendenden Programmeinheit zugeordneten Wert in dem ersten Speicherfeld suchen und die jeweils zugeordneten Datenbereiche invalidieren, löschen oder zurückschreiben.

Im einfachsten Fall ist das erste Speicherfeld des Kennungsbereiches ein Bit breit, so daß ein Verweis auf zwei unterschiedliche kryptographische Schlüssel möglich ist.

In einer bevorzugten Ausgestaltung umfaßt der Datenbereich eines Speichereintrags mehrere Worte. Ein Wort kann dabei eine an sich beliebige Bit-Breite aufweisen. Es ist natürlich zweckmäßig, wenn alle Worte eines Speichereintrags die gleiche Bit-Breite aufweisen.

Vorzugsweise ist bei einer derartigen Ausgestaltung jedem Wort des Datenbreiches ein erstes Speicherfeld zugeordnet. Somit ist es möglich, jedem Wort eines Datenbereiches einen unterschiedlichen kryptographischen Schlüssel zuzuweisen. Eine denkbare Alternative bestünde auch darin, unabhängig von der Anzahl der Worte des Datenbereiches eines Speichereintrags auch weniger zugeordnete erste Speicherfelder vorzusehen. In diesem Fall wäre dann mehreren Worten eines Datenbereiches der gleiche kryptographische Schlüssel zugewiesen.

In einer weiteren vorteilhaften Ausgestaltung des Speichers ist vorgesehen, den Adreßbereich eines Speichereintrags aufzuteilen in einen mehrere Bits umfassenden ersten Adreßbereich, der die physikalische Adresse des Speichereintrags beinhaltet und in eine mehrere Bits umfassenden zweiten Adreßbereich, der die höchstwertigen Bits einer logischen Adresse einer Programmeinheit beinhaltet. Der zweite Adreßbereich könnte statt dessen auch einen Verweis auf die logische Adresse einer Programmeinheit beinhalten. Dieses Vorgehen weist folgende Vorteile auf: Bei einem Wechsel zwischen zwei Programmeinheiten kann der Prozessor in dem zweiten Adreßbereich nach den zugeordneten logischen Adressen der zu beendenden Programmeinheit suchen. Dies ermöglicht, daß sogar die zu einer Programmeinheit gehörenden Daten in den Datenbereichen unterschiedlicher Speichereinträge mit unterschiedlichen kryptographischen Schlüsseln verschlüsselt sein können. Obwohl hierdurch eine sehr hohe Komplexität bei der Verschlüsselung und auch eine hohe Zuverlässigkeit und Sicherheit gegenüber einem unbefugten Zugriff erzielt wird, gestaltet sich das Synchronisieren mit dem Hauptspeicher der Rechenanlage genauso effizient, als wenn nach gleichen Werten in den ersten Speicherfeldern des Kennungsbereichs gesucht wird.

Vorzugsweise ist in dem Kennungsbereich ein zweites Speicherfeld vorgesehen, das einen Marker beinhaltet, der angibt, ob in dem Datenbereich ein gültiger oder ein ungültiger Wert gespeichert ist. Das zweite Speicherfeld ist aus dem Stand der Technik als sogenanntes "Valid Flag" bekannt. Besitzt der Marker des zweiten Speicherfeldes einen Zustand, der einem ungültigen Wert entspricht, so darf der Datenbereich des betreffenden Speichereintrags ohne weiteres gelöscht oder verändert werden. Repräsentiert der Zustand des Markers des zweiten Speicherfeldes hingegen einen gültigen Wert, so ist eine Synchronisation mit dem Hauptspeicher notwendig, bevor eine Datenänderung oder eine Löschung erfolgen darf.

Es ist weiterhin vorteilhaft, wenn der Speicher in dem Kennungsbereich ein drittes Speicherfeld beinhaltet, das einen Marker beinhaltet, der angibt, ob von dem Prozessor ein Wert in dem Datenbereich des Speichers geändert wurde. Das dritte Speicherfeld ist auch unter dem Namen "Dirty Flag" bekannt. Der Marker in dem dritten Speicherfeld nimmt einen ersten Zustand an, sobald ein Wert in dem Datenbereich der betreffenden Speichereintrags geändert wurde. Der Marker signalisiert z. B. bei einem Wechsel zwischen zwei Programmeinheiten, daß der betreffende Inhalt des Datenbereiches mit dem Hauptspeicher synchronisiert werden muß.

Vorzugsweise ist der Speicher als sogenannter n-Wege-Satz assoziativer Cache-Speicher ausgebildet. Diese Speicher weisen den Vorteil auf, daß der Prozessor auf gezielte Weise auf einen Speichereintrag des Cache-Speichers zugreifen kann, auch wenn dieser eine große Anzahl an Speichereinträgen umfaßt. n-Wege-Satz-assoziative-Cache-Speicher sind aus dem Stand der Technik seit langem bekannt, so daß an dieser Stelle auf eine eingehende Erläuterung der Funktion und der damit verbundenen Vorteile verzichtet wird.

Die erfindungsgemäße Rechenanlage umfaßt den oben beschriebenen Speicher, der mit einem Prozessor gekoppelt ist. Darüber hinaus ist ein Verbindungsmittel vorgesehen, das mit dem Speicher und/oder dem Prozessor gekoppelt ist. Weiterhin ist das Verbindungsmittel mit dem Hauptspeicher gekoppelt, der beispielsweise als externer Speicher außerhalb eines die Zentraleinheit und den Cache-Speicher umfassenden Prozessorchip ausgebildet sein kann.

Im folgenden wird die Erfindung an Hand von Ausführungsbeispielen mittels der beigefügten Zeichnungen näher erläutert.
Es zeigen:
- Figur 1: schematisch die Struktur der erfindungsgemäßen Rechenanlage,
- Figur 2: den Aufbau eines Speichereintrags in einer ersten Ausführungsform,
- Figur 3: den Aufbau eines Speichereintrags in einer zweiten Ausführungsform, und
- Figur 4: einen aus einer Vielzahl an Speichereinträgen bestehenden Speicher, der als n-wege-Satzassoziativer Speicher ausgebildet ist.

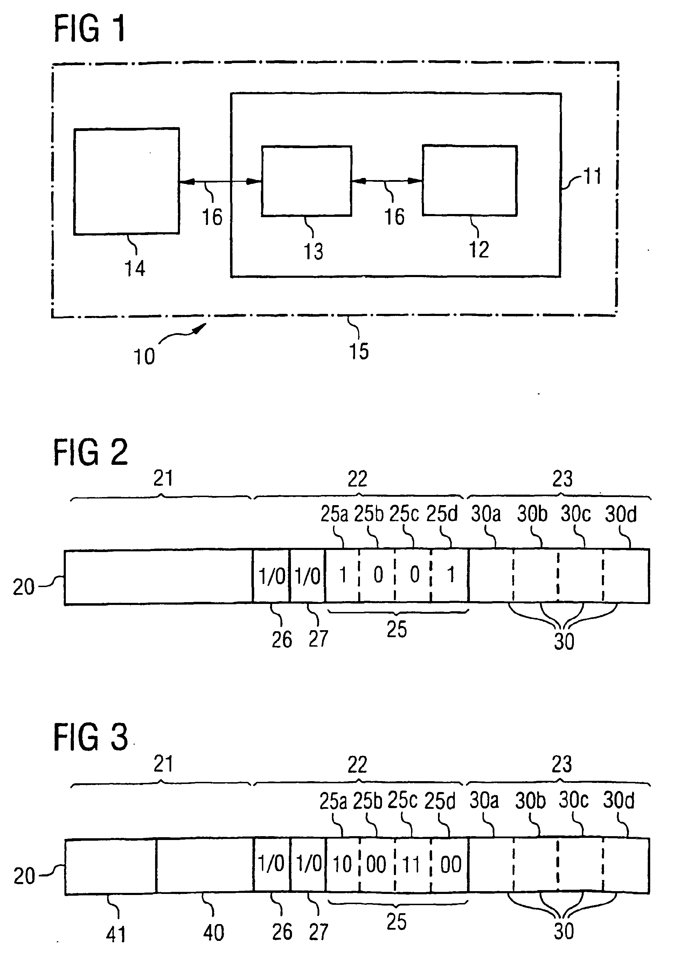

In der Figur 1 ist schematisch die Struktur einer Rechenanlage 10 in einer beispielhaften Ausführungsform dargestellt. Die Rechenanlage 10 umfaßt einen Prozessor 12, einen Hauptspeicher 14 und einen Speicher (Cache-Speicher) 13, die jeweils über ein Verbindungsmittel 16, zum Beispiel einer Busleitung, miteinander in Verbindung stehen. Die Rechenanlage 10 kann weitere Komponenten enthalten, beispielsweise ein Ein-/Ausgabemittel, das mit allen genannten Komponenten verbunden ist. Das Ein-/Ausgabemittel steuert die Übertragung von Daten zwischen der Zentraleinheit 11 und (nicht dargestellten) Peripheriegeräten, wie z. B. Tastatur, Bildschirm, Drucker, Magnetplattenspeicher, Diskettenlaufwerk, CD-ROM-Laufwerk, Modem, Schreib/Lesegerät usw.. Der Prozessor 12 und der Speicher 13 bilden zusammen die Zentraleinheit 11. Vorzugsweise ist die Zentraleinheit 11 und der Hauptspeicher 14 sowie evtl. weitere vorhandene Komponenten auf einem einzigen Chip integriert. Dies ist schematisch durch die gestrichelte Linie, die mit dem Bezugszeichen 15 versehen ist, angedeutet.

Obwohl die Zentraleinheit 11 gemäß der Figur 1 nur einen Prozessor 12 aufweist, der auf den Speicher 13 zugreift kann auch wenigstens ein (nicht dargestellter) weiterer Prozessor vorgesehen sein, der wie der dargestellte Prozessor 12 auf den Speicher 13 und evtl. auf den Speicher 14 zugreift.

In der Figur 2 ist der Aufbau eines erfindungsgemäßen Speichereintrags in einer ersten Ausführungsform dargestellt. Der Speichereintrag weist in bekannter Weise einen Adreßbereich 21, einen Datenbereich 23 und einen Kennungsbereich 22 auf. Der Datenbereich 23 enthält die eigentlichen Daten, während der Adreßbereich 21 die Speicheradresse des entsprechenden Speichereintrags 20 enthält. Der Kennungsbereich 22 enthält Informationen über die Gültigkeit des Speichereintrags (zweites Speicherfeld 26), und die Angabe, ob seit dem letzten Synchronisieren Daten in dem Datenbereich 23 verändert wurden (drittes Speicherfeld 27). Das dritte Speicherfeld ist aus dem Stand der Technik auch unter dem Namen "Dirty Flag" bekannt. Das zweite Speicherfeld wird üblicherweise als "Valid Flag" bezeichnet.

Darüber hinaus ist in dem Kennungsbereich 22 ein erstes Speicherfeld 25 vorgesehen. Das Speicherfeld 25 ist beispielhaft in vier Speicherfelder 25a bis 25d unterteilt. Jedem der Speicherfelder 25a bis 25d ist ein Teil-Datenbereich 30a bis 30d des Datenbereiches 23 zugeordnet. Jeder der Teil-Datenbereiche 30a bis 30d ist als Wort ausgebildet, wobei jedes Wort beispielsweise 32 Bit breit sein kann. Jedes der ersten Speicherfelder 25a bis 25d beinhaltet eine Information, mit welchem kryptographischem Schlüssel die Daten in den Bereichen 30a bis 30d verschlüsselt sind. Konkret bedeutet dies, daß der in dem ersten Speicherfeld 25a zugeordnete kryptographische Schlüssel Daten in dem Datenbereich 30a ver- bzw. entschlüsselt. In entsprechender Weise können die in dem Datenbereich 30d befindlichen Daten mit dem dem ersten Speicherfeld 25d zugeordneten kryptographischen Schlüssel bearbeitet werden. Beispielhaft ist jedes Feld 1 Bit breit, so daß ein Verweis auf insgesamt zwei kryptographische Schlüssel möglich ist. Die kryptographischen Schlüssel können in einem separaten Register, das nicht näher dargestellt ist, abgespeichert sein. Der Prozessor, der den Wert des ersten Speicherfeldes 25 aus einem Speichereintrag 20 ausliest, kann dann in dem betreffenden Register den zugeordneten kryptographischen Schlüssel ermitteln und die in verschlüsselter Form abgelegten Daten in dem den jeweiligen ersten Speicherfeld zugeordneten Teil-Datenbereichen 30a bis 30d entschlüsseln.

Denkbar ist auch, anstatt in den ersten Speicherfeldern 25a bis 25d einen Verweis auf einen kryptographischen Schlüssel zu hinterlegen, den kryptographischen Schlüssel direkt in die ersten Speicherfelder einzuspeichern. Dies ist insbesondere bei sehr vielen, aber sehr kurzen kryptographischen Schlüsseln eine sinnvolle Alternative. Natürlich müßte jedes der Speicherfelder 25a bis 25d dann mehrere Bit breit sein.

In Figur 3 ist ein weiteres Ausführungsbeispiel eines erfindungsgemäßen Speichereintrags 20 dargestellt. Diese unterscheidet sich von dem Speichereintrag aus Figur 2 dadurch, daß der Adreßbereich 21 in einen ersten und einen zweiten Adreßbereich 40, 41 unterteilt sind. Jeder der Adreßbereiche 40, 41 ist mehrere Bits breit. Der erste Adreßbereich 40, der beispielsweise 16 Bit breit ist, beinhaltet die physikalische Adresse eines Speichereintrags. Der zweite Adreßbereich 41, der beispielsweise 12 Bit breit ist, beinhaltet die höchstwertigen Bits einer logischen Adresse einer Programmeinheit. Dabei wird davon ausgegangen, daß jede Programmeinheit in einem vorgegebenen logischen Adressraum eingeschrieben ist. Die logischen Adressen dieses Speicherblocks sind alle identisch. Dies bedeutet, daß an Hand der höchstwertigen Bits der logischen Adressen eine Programmeinheit identifiziert werden kann. Sollen alle zu einer Programmeinheit zugeordneten Speichereinträge des erfindungsgemäßen Cache-Speichers mit dem Hauptspeicher synchronisiert werden, so kann eine Suche nach allen identischen Werten in dem zweiten Adreßbereich des Cache-Speichers erfolgen. Dies hat den Vorteil, daß auch innerhalb einer Programmeinheit unterschiedliche kryptographische Schlüssel verwendet werden können.

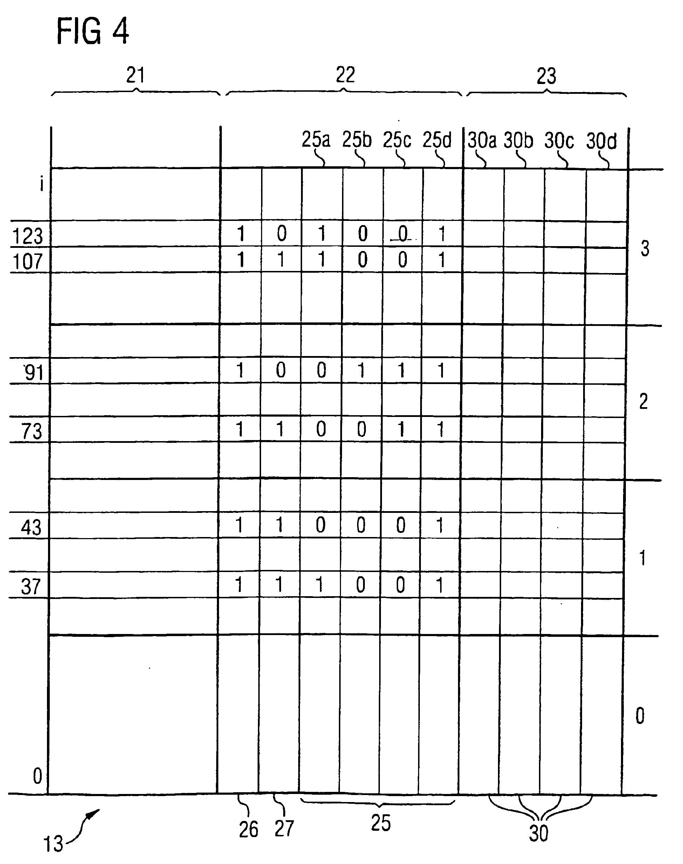

Im ersten Ausführungsbeispiel der Figur 2 werden die in den ersten Speicherfeldern 25 eingetragenen Werte als Suchkriterium für eine Synchronisation verwendet. Wie aus der nachfolgenden Beschreibung der Figur 4, in der ein Speicher mit n Speichereinträgen dargestellt ist, ersichtlich werden wird, wird dabei nicht nur eines der Teil-Speicherfelder 25a bis 25d als Vergleichskriterium herangezogen, sondern die gesamte in dem ersten Speicherfeld 25 abgespeicherte Bitfolge.

Der in Figur 4 dargestellte Speicher 13 ist als vier-Wege-Satz-assoziativer-Cache-Speicher ausgebildet. Der Speicher 13 weist insgesamt 4 Sätze auf, die auf der rechten Seite von 0 bis 3 durchnummeriert sind. Jeder der vier Sätze weist eine identische Anzahl an Speichereinträgen auf. Der Aufbau und die Funktionsweise eines n-Wege-Satz-Assoziativen-Cache-Speichers ist aus dem Stand der Technik bekannt und bedarf deshalb an dieser Stelle keiner näheren Erläuterung. An Hand der Figur 4 läßt sich jedoch die Vorgehensweise bei der Synchronisation des Cache-Speichers 13 mit dem Hauptspeicher 14 anschaulich erläutern.

In den Sätzen 1 bis 3 sind jeweils zwei Speichereinträge beispielhaft herausgestellt, wobei der Kennungsbereich 22 jeweils mit Daten versehen wurde. Dabei bezeichnet i den Index des Speichereintrags. i ist ein Wert aus (0,1,...n x m - 1), wobei n die Anzahl der Sätze und m die Anzahl der Speichereinträge pro Satz ist.

Wie in der Beschreibung zu Figur 2 bereits dargestellt wurde, ist jedes der Teil-Speicherfelder 25a bis 25d einem der Teil-Datenbereiche 30a bis 30d zugeordnet. Da jedes der Teil-Speicherfelder 25a bis 25d jeweils nur ein Bit breit ist, verweist ein Wert "1" auf einen ersten kryptographischen Schlüssel und ein Wert "0" auf einen zweiten kryptographischen Schlüssel, mit dem die Daten in jeweils zugeordneten Teil-Datenbereichen 30a bis 30d verschlüsselt sind. Da davon ausgegangen wird, daß ein kryptographischer Schlüssel einer bestimmten Programmeinheit zugewiesen ist, bedeutet dies, daß überall dort, wo in dem ersten Speicherfeld 25 ein Verweis auf diesen kryptographischen Schlüssel enthalten ist, im zugehörigen Teil-Datenbreich ein möglicherweise zu synchronisierendes Datum enthalten ist. Zur Synchronisation werden folglich nicht die Informationen verwendet, die sich in dem Adreßbereich 21 befinden, sondern es werden die in dem ersten Speicherfeld 25 enthaltenen Verweise auf kryptographische Schlüssel untersucht.

Beispielsweise sollen all diejenigen Speichereinträge synchronisiert werden, denen in den Speicherfeldern 25a bis 25d eine "0" zugeordnet ist. Der Prozessor wird zu diesem Zweck an eine Cache-Logik einen Synchronisationswert übermitteln, der alle Werte außer "1-1-1-1" umfaßt. Bei einem Vergleich dieses Synchronisationswertes mit dem aus vier Bit bestehenden Wert des ersten Speicherfeldes 25 werden folglich die Speichereinträge 37, 43, 73, 91, 107 und 123 als Treffer gemeldet. Die Cache-Logik überprüft nach Auffinden dieser Speichereinträge, in welchen davon das dritte Speicherfeld 27 einen zweiten Zustand (hier:"0") aufweist. Dies ist in den Speichereinträgen 91 und 123 der Fall. Der zweite Zustand des dritten Speicherfeldes 27 zeigt an, daß seit dem letzten Synchronisieren keine Änderung in einem der Teil-Datenbereiche 30a bis 30d erfolgt ist. Somit können in den Speichereinträgen 91 und 123 die Marker in den zweiten Speicherfeldern 25 invalidiert werden. Dies bedeutet, daß in dem zweiten Speicherfeld 26 in den genannten Speichereinträgen 91 und 123 die Marker in einen ersten Zustand (hier:0) verbracht werden.

Bei den übrigen Speichereinträgen 37, 43, 73 und 107 ist vor dem Invalidieren eine Synchronisation mit dem Hauptspeicher notwendig. Synchronisation bedeutet hierbei, daß die in den entsprechenden Teil-Datenbereichen 30a bis 30d stehenden Daten in den Hauptspeicher übertragen werden. Zum Synchronisieren merkt sich die Cache-Logik die Adresse des ersten aufgefundenen Speichereintrags, wobei der Suchlauf beispielsweise mit dem Speichereintrag 0 in Richtung höher nummerierter Speichereinträge erfolgt. Der erste, einen Treffer ergebende Speichereintrag trägt die Nummer 37. Die Cache-Logik meldet die Adresse des entsprechenden Satzes nach außen, im vorliegenden Beispiel Satz 1. Gleichzeitig kann in einem speziellen Register (ein sogenanntes Writeback-Register) ein weiterer Marker gesetzt werden, der anzeigt, daß ein Zurückschreibe-Vorgang vorgenommen wird. Anschließend kann durch Adressieren dieses Satzes durch die Cache-Logik der Adressbereich (21) des Speichereintrags ausgelesen werden. Durch einen assoziativen Suchvorgang mit dem so eben gelesenen Adreßbereich wird der übliche Rückschreibe-Vorgang durchgeführt - das heißt der Inhalt des Adressbereiches des Speichereintrags wird im Hauptspeicher abgelegt - und die Marker des zweiten und dritten Speicherfeldes 26, 27 werden zurückgesetzt. Durch den im Writeback-Register gesetzten weiteren Marker weiß die Cache-Logik, daß ein weiterer Suchvorgang angestoßen werden muß. Nachdem dies geschehen ist, wird der weitere Marker in dem Writeback-Register zurückgesetzt. Wird ein weiterer Speichereintrag aufgefunden, bei dem der Synchronisations-Wert mit dem 4-Bit-Code des ersten Speicherfeldes 25 übereinstimmt, so findet der eben beschriebene Vorgang von vorne statt. Hat die Cache-Logik alle Speichereinträge von 0 bis n x m - 1 durchlaufen, ohne daß in dem Writeback-Register ein Marker gesetzt wurde, so bedeutet dies, daß alle fraglichen Speichereinträge synchronisiert wurden.

### Bezugszeichenliste

- 10: Rechenanlage
- 11: Zentraleinheit
- 12: Prozessor
- 13: Speicher (Cache-Speicher)
- 14: Hauptspeicher
- 15: Chip
- 16: Verbindungsmittel
- 20: Speichereintrag (Cache-Zeile)
- 21: Adressbereich
- 22: Kennungsbereich
- 23: Datenbereich
- 25a, 25b, 25c, 25d: Erstes Speicherfeld
- 26: Zweites Speicherfeld
- 27: Drittes Speicherfeld
- 30a, 30b, 30c, 30d: Wort
- 40: Erster Adressbereich (Adressbereich)
- 41: Zweiter Adressbereich (Zuordnungsspeicherbereich)

## Patentansprüche

1. Verfahren zum Synchronisieren eines Cache-Speichers mit einem Hauptspeicher, wobei der Cache-Speicher zur Zwischenspeicherung von Daten zwischen einem Prozessor und einem Hauptspeicher vorgesehen ist, und wobei Speichereinträge des Cache-Speichers zumindest einen Datenbereich und einen Kennungsbereich aufweisen, mit den Schritten:
a) Bereitstellen eines zum Vergleich vorgesehenen Synchronisationswertes durch den Prozessor, aufgrund dessen festgestellt wird, welcher Speichereintrag (20) bzw. welche Speichereinträge (20) des Datenbereiches (23) des Cache-Speichers (13) mit dem Hauptspeicher (14) synchronisiert werden soll oder sollen,
b) Vergleich des bereitgestellten Synchronisationswertes mit dem Inhalt zumindest eines Speicherfeldes (25) eines jeden Speichereintrags (20) durch eine Cache-Logik des Cache-Speichers (13),
c) bei einer Übereinstimmung zwischen dem bereitgestellten Synchronisations-Wert und dem Inhalt des zumindest einen Speicherfeldes (25) Überprüfung eines Markers eines dritten Speicherfeldes (27) des Kennungsbereichs durch die Cache-Logik des Cache-Speichers (13) auf einen ersten Zustand, welcher anzeigt, daß eine Änderung des Datenbereichs (23) des Speichereintrags (20) seit dem letzten Synchronisieren erfolgt ist,
d) bei gegebenen ersten Zustand des Markers Übertragung des Inhalts des Datenbereiches des Speichereintrags (20) in den Hauptspeicher (14).
ein erstes Speicherfeld vorgesehen ist, das einen Wert beinhaltet, der angibt, mit welchem keryptographischen Schlüssel Daten in dem Datenbereich (23) des Speichers (13) gespeichert sind, und das für den Vergleich benutzte Speicherfeld entweder dieses erste Speicherfeld (25) oder ein Adressbereich (41) im Speichereintrags (20) ist der die höchstwertigen Bits eines logischen Adresse eines Programmeinheit oder einen Verweis auf die logische Adresse einer Programm einheit beinhaltet.

2. Verfahren nach Anspruch 1,
**dadurch gekennzeichnet, daß** das für den Vergleich benutze Speicherfeld einen kryptographischen Schlüssel enthält.

3. Verfahren nach Anspruch 1,
**dadurch gekennzeichnet, daß** das für den Vergleich benutze Speicherfeld einen Verweis auf den kryptographischen Schlüssel enthält.

4. Verfahren nach einem der vorhergehenden Ansprüche,
bei dem der Datenbereich (23) eines Speichereintrags (20) mehrere Worte (30a...30d) umfaßt.

5. Verfahren nach Anspruch 4,
bei dem jedem Wort (30a 30d) des Datenbereiches (23) ein erstes Speicherfeld (25a...25d) zugeordnet ist.

6. Verfahren nach einem der vorhergehenden Ansprüche,
bei dem der Adressbereich (21) eines Speichereintrags (20) aufgeteilt ist in einen mehrere Bits umfassenden ersten Adressbereich (40), der die physikalische Adresse eines Speichereintrags (20) beinhaltet, und in einen mehrere Bits umfaßenden zweiten Adressbereich, der die höchstwertigen Bits einer logischen Adresse einer Programmeinheit beinhaltet.

7. Verfahren nach einem der vorhergehenden Ansprüche,
bei dem in dem Kennungsbereich (22) ein zweites Speicherfeld (26) vorgesehen ist, das einen Marker beinhaltet, der angibt, ob in dem Datenbereich (23) ein gültiger oder ungültiger Wert gespeichert ist.

8. Verfahren nach Anspruch 7,
bei dem bei einem gegebenen zweiten Zustand des Markers, der anzeigt, daß keine Änderung des Datenbereiches (23) des Speichereintrags (20) seit dem letzten Synchronisieren erfolgt ist, Setzen des Markers, der angibt, ob in dem Datenbereich (23) ein gültiger oder ungültiger Wert gespeichert ist, auf einen ersten Zustand, der anzeigt, daß der Speichereintrag (20) einen ungültigen Wert aufweist.

9. Verfahren nach einem der vorhergehenden Ansprüche,
bei dem die Schritte a) bis d) solange wiederholt werden bis keine Übereinstimmung zwischen dem bereitgestellten Synchronisations-Wert und dem Inhalt des zum Vergleich benutzen Speicherfeldes (25) eines Speichereintrags vorliegt.

10. Verfahren nach einem der vorhergehenden Ansprüche,
bei dem der Schritt d) des Übertragens des Inhalts des Datenbereiches des Speichereintrags (20) in den Hauptspeicher (14) folgende Schritte umfaßt:
aa) Ermittlung der Adresse des Speichereintrags (20) des Cache-Speichers (13),
bb) Übergeben der Adresse aus dem Adressbereich (21) des Speichereintrags (20) an den Prozessor (12),
cc) Adressieren des Speichereintrags (20) durch den Prozessor (12),
dd) Auslesen des Inhalts des Datenbereiches (23) des Speichereintrags, und
ee) Speichern des Inhalts des Datenbereiches (23) des Speichereintrags (20) im Hauptspeicher.

11. Verfahren nach Anspruch 11, bei dem
zwischen Schritt bb) und cc) ein Setzen eines weiteren Markers in einem Register erfolgt, welches außerhalb des Cache-Speichers (13) angeordnet ist und durch den Prozessor (12) auslesbar ist, wobei der Marker anzeigt, daß ein Zurückschreibe-Vorgang vorgenommen wird.

12. Verfahren nach Anspruch 12, bei dem
nach Schritt ee) ein Rücksetzen des Markers in dem Register erfolgt, nachdem ein weiterer Vergleichsvorgang zwischen dem bereitgestellten Synchronisations-Wert mit dem Inhalt des zum Vergleich benutzen Speicherfeldes (25) eines jeden Speichereintrags (20) durch den Cache-Speicher (13) erfolgt ist.

13. Cache-Speicher, der zur Durchführung des Verfahrens nach einem der Ansprüche 1 bis 12 eingerichtet ist.

## Claims

1. Method for synchronizing a cache memory with a main memory, the cache memory being provided to buffer-store data between a processor and a main memory, and memory entries of the cache memory having at least one data area and one identification area, having the following steps:
a) the processor provides a synchronization value for comparison purposes, this value being used to determine which memory entry (20), or which memory entries (20), of the data area (23) of the cache memory (13) is, or are, meant to be synchronized with the main memory (14),
b) a cache logic circuit of the cache memory (13) compares the synchronization value provided with the contents of the memory field (25), of which there is at least one, of each memory entry (20),
c) where the synchronization value provided matches the contents of the memory field (25), of which there is at least one, the cache logic circuit of the cache memory (13) checks a flag of a third memory field (27) of the identification area for a first state, which indicates that a change has been made to the data area (23) of the memory entry (20) since the last synchronization, and
d) where the flag is in the given first state, the contents of the data area of the memory entry (20) are transferred to the main memory (14),
**characterized in that** a first memory field is provided, which contains a value indicating with which cryptographic key data are stored in the data area (23) of the memory (13), and
the memory field used for the comparison is either this first memory field (25) or an address area (41) in the memory entry (20) which contains the most significant bits of a logical address of a program unit or a reference to the logical address of a program unit.

2. Method according to Claim 1, **characterized in that** the memory field used for the comparison contains a cryptographic key.

3. Method according to Claim 1, **characterized in that** the memory field used for the comparison contains a pointer to the cryptographic key.

4. Method according to one of the preceding claims, in which the data area (23) of a memory entry (20) contains a plurality of words (30a...30d).

5. Method according to Claim 4, in which a first memory field (25a...25d) is assigned to each word (30a...30d) of the data area (23).

6. Method according to one of the preceding claims, in which the address area (21) of a memory entry (20) is divided into a first address area (40) containing a plurality of bits, which holds the physical address of a memory entry (20), and into a second address area containing a plurality of bits, which holds the most significant bits of a logical address of a program unit.

7. Method according to one of the preceding claims, in which a second memory field (26) is provided in the identification area (22), which field contains a flag indicating whether a valid or invalid value is saved in the data area (23).

8. Method according to Claim 7, in which, where the flag has a given second state indicating that no change to the data area (23) of the memory entry (20) has taken place since the last synchronization, the flag indicating whether a valid or invalid value is saved in the data area (23) is set to a first state that indicates that the memory entry (20) has an invalid value.

9. Method according to one of the preceding claims, in which the steps a) to d) are repeated until there is no match between the provided synchronization value and the contents of the memory field (25) of a memory entry used for the comparison.

10. Method according to one of the preceding claims, in which the step d) of transferring the contents of the data area of the memory entry (20) into the main memory (14) involves the following steps:
aa) determining the address of the memory entry (20) of the cache memory (13),
bb) transferring to the processor (12) the address from the address area (21) of the memory entry (20),
cc) addressing the memory entry (20) by the processor (12),
dd) reading the contents of the data area (23) of the memory entry, and
ee) saving the contents of the data area (23) of the memory entry (20) in the main memory.

11. Method according to Claim 10, in which between step bb) and cc) another flag is set in a register which is arranged outside the cache memory (13) and can be read by the processor (12), the flag indicating that a write-back procedure has been performed.

12. Method according to Claim 11, in which after step ee), the flag in the register is reset once the cache memory (13) has performed another comparison procedure between the provided synchronization value and the contents of the memory field (25) used for the comparison of each memory entry (20).

13. Cache memory which is set up to carry out the method according to one of Claims 1 to 12.

## Revendications

1. Procédé pour synchroniser une mémoire cache avec une mémoire principale, la mémoire cache étant prévue pour la mémorisation temporaire de données entre un processeur et une mémoire principale et des enregistrements dans la mémoire cache comportant au moins une zone de données et une zone d'identification, avec les étapes suivantes :
a) fourniture d'une valeur de synchronisation, prévue pour la comparaison, par le processeur, sur la base de laquelle on détermine quel enregistrement en mémoire (20) ou quels enregistrements en mémoire (20) de la zone de données (23) de la mémoire cache (13) doivent être synchronisés avec la mémoire principale (14),
b) comparaison de la valeur de synchronisation fournie au contenu d'au moins un champ de mémoire (25) d'un enregistrement en mémoire (20) par une logique de la mémoire cache (13),
c) en cas de coïncidence entre la valeur de synchronisation fournie et le contenu du ou des champs de mémoire (25), vérification d'un repère d'un troisième champ de mémoire (27) de la zone d'identification par la logique de la mémoire cache (13) pour reconnaître un premier état qui indique qu'une modification de la zone de données (23) de l'enregistrement en mémoire (20) a eu lieu depuis la dernière synchronisation,
d) pour un premier état donné du repère, transmission du contenu de la zone de données de l'enregistrement en mémoire (20) dans la mémoire principale (14).
**caractérisé en ce qu'**il est prévu un premier champ de mémoire qui contient une valeur qui indique avec quelle clé cryptographique des données sont mémorisées dans la zone (23) de données de la mémoire (13), et
le champ de mémoire utilisé pour la comparaison est soit ce premier champ (25) de mémoire, soit une zone (41) d'adresse de l'enregistrement (20) en mémoire qui a les bits de poids le plus fort d'une adresse logique d'une unité de programme ou un renvoi à l'adresse logique d'une unité de programme.

2. Procédé selon la revendication 1,
**caractérisé par le fait que** le champ de mémoire utilisé pour la comparaison contient une clé cryptographique.

3. Procédé selon la revendication 1,
**caractérisé par le fait que** le champ de mémoire utilisé pour la comparaison contient un pointeur sur la clé cryptographique.

4. Procédé selon l'une des revendications précédentes,
dans lequel la zone de données (23) d'un enregistrement en mémoire (20) comprend plusieurs mots (30a à 30d).

5. Procédé selon la revendication 4,
dans lequel un premier champ de mémoire (25a à 25d) est associé à chaque mot (30a à 30d) de la zone de données (23).

6. Procédé selon l'une des revendications précédentes,
dans lequel la zone d'adresse (21) d'un enregistrement en mémoire (20) est divisée en une première zone d'adresse (40) qui comprend plusieurs bits et qui contient l'adresse physique d'un enregistrement en mémoire (20) et en une deuxième zone d'adresse qui comprend plusieurs bits et qui contient les bits de poids fort d'une adresse logique d'une unité de programme.

7. Procédé selon l'une des revendications précédentes,
dans lequel il est prévu dans la zone d'identification (22) un deuxième champ de mémoire (26) qui contient un repère qui indique si une valeur valide ou invalide est mémorisée dans la zone de données (23).

8. Procédé selon la revendication 7,
dans lequel, pour un deuxième état donné du repère qui indique qu'aucune modification de la zone de données (23) de l'enregistrement en mémoire (20) n'a eu lieu depuis la dernière synchronisation, on met le repère qui indique si une valeur valide ou invalide est mémorisée dans la zone de données (23) à un premier état qui indique que l'enregistrement en mémoire (20) comporte une valeur invalide.

9. Procédé selon l'une des revendications précédentes,
dans lequel on répète les étapes a) à d) jusqu'à ce qu'il n'y ait pas de coïncidence entre la valeur de synchronisation fournie et le contenu du champ de mémoire (25), utilisé pour la comparaison, d'un enregistrement en mémoire.

10. Procédé selon l'une des revendications précédentes, dans lequel l'étape d) de la transmission du contenu de la zone de données de l'enregistrement en mémoire (20) dans la mémoire principale (14) comprend les étapes suivantes :
aa) détermination de l'adresse de l'enregistrement en mémoire (20) de la mémoire cache (13),
bb) transfert de l'adresse tirée de la zone d'adresse (21) de l'enregistrement en mémoire (20) vers le processeur (12),
cc) adressage de l'enregistrement en mémoire (20) par le processeur (12),
dd) lecture du contenu de la zone de données (23) de l'enregistrement en mémoire, et
ee) mémorisation du contenu de la zone de données (23) de l'enregistrement en mémoire (20) dans la mémoire principale.

11. Procédé selon la revendication 10,
dans lequel on effectue entre l'étape bb) et l'étape cc) une affectation d'un autre repère dans un registre qui est placé en dehors de la mémoire cache (13) et qui peut être lu par le processeur (12), le repère indiquant qu'une opération d'écriture en retour est effectuée.

12. Procédé selon la revendication 11,
dans lequel, après l'étape ee), on effectue une remise à l'état initial du repère dans le registre après qu'une autre opération de comparaison entre la valeur de synchronisation fournie et le contenu du champ de mémoire (25), utilisé pour la comparaison, d'un enregistrement en mémoire (20) a été effectuée par la mémoire cache (13).

13. Mémoire cache qui est conçue pour la mise en oeuvre du procédé selon l'une des revendications 1 à 12.
